# EUROPÄISCHE PATENTSCHRIFT

(11) **EP 2 529 337 B1**
(45) Veröffentlichungstag und Bekanntmachung des Hinweises auf die Patenterteilung: **29.07.2020**
(21) Anmeldenummer: 11700942.3
(22) Anmeldetag: 24.01.2011
(51) Int. Cl.: G06K 19/073

(54) **SICHERHEITSANHÄNGER, ANORDNUNG MIT EINEM SICHERHEITSANHÄNGER UND VERFAHREN ZUM BETREIBEN EINES SICHERHEITSANHÄNGERS**
SECURITY TAG, ASSEMBLY HAVING A SECURITY TAG AND METHOD FOR OPERATING A SECURITY TAG
ÉTIQUETTE DE SÉCURITÉ, ENSEMBLE COMPRENANT UNE ÉTIQUETTE DE SÉCURITÉ ET PROCÉDÉ POUR FAIRE FONCTIONNER UNE ÉTIQUETTE DE SÉCURITÉ

(30) Priorität: 26.01.2010 DE 102010005714
(43) Veröffentlichungstag der Anmeldung: 05.12.2012
(73) Patentinhaber: Schreiner Group GmbH & Co. KG, 85764 Oberschleissheim (DE)
(72) Erfinder: GALFE, Günther, 81827 München (DE); GERMANN, Thomas, 85567 Grafing (DE); GRÖTZNER, Roland, 85716 Unterschleißheim (DE); SCHREINER, Helmut, 80995 München (DE); SURKAU, Reinhard, 82256 Fürstenfeldbruck (DE)
(74) Vertreter: Epping - Hermann - Fischer
(86) Internationale Anmeldenummer: PCT/EP2011/050920
(87) Internationale Veröffentlichungsnummer: WO 2011/092144

(56) Entgegenhaltungen:
- EP-A1- 1 505 537
- US-A1- 2003 031 819

## Beschreibung

### Gebiet der Erfindung

Die Erfindung betrifft eine RFID-Transponderanordnung, die an Gegenstände angebracht werden kann und mit einem RFID-Transponder ausgestattet ist. Die Erfindung betrifft weiterhin eine Anordnung, die die RFID-Transponderanordnung mit weiteren Elementen kombiniert, sowie ein Verfahren zum Betreiben einer RFID-Transponderanordnung, bei der diese an einem Körper angebracht wird.

### Hintergrund der Erfindung

Anhänger, die an einen Körper angebracht werden, sind als Gepäckanhänger zur Kennzeichnung in Logistikprozessen, beispielsweise bei der Abfertigung von Reisegepäck in einem Flughafen, gebräuchlich. Die Anhänger werden als langgestreckte Banderolen geliefert, vom Abfertigungspersonal um den Tragegriff eines Gepäckstücks geführt und an beiden freien Enden miteinander verklebt. Die Logistikinformation wird optisch in Form von alphanumerischen Zeichen und/oder einem Barcode vor Ort auf die Banderole aufgedruckt. Darüber hinaus sind auch Banderolen mit RFID-Transpondern in Verwendung, deren Information elektronisch berührungslos lesbar ist. Problematisch ist, dass Banderolen sich unabsichtlich vom Gepäckstück lösen können oder missbräuchlich vom Gepäckstück gelöst und an ein anderes Gepäckstück angebracht werden könnten. Eine Fehlfunktion oder ein Missbrauch soll feststellbar sein EP 1 505 537 A1 zeigt RFID-Transponderanordnungen, bei denen der Chip direkt mit der Hauptantenne des RFID-Transponders verbunden ist.

Wünschenswert ist daher ein Sicherheitsanhänger, der möglichst manipulationssicher ist und bei dem ein Manipulationsversuch, beispielsweise ein Ablösen vom Gepäckstück, an dem er befestigt war, in relativ einfacher Weise erkennbar ist.

Die Erfindung betrifft eine RFID-Transponderanordnung gemäß Anspruch 1, eine Anordnung mit einer RFID-Transponderanordnung gemäß Anspruch 12, sowie ein Verfahren zum Betreiben einer RFID-Transponderanordnung gemäß Anspruch 15. Bevorzugte Ausführungsformen sind in den abhängigen Ansprüchen definiert.

Gemäß der Ausführungsform kann beim Sicherheitsanhänger die Antenne Längsausdehnung aufweisen und die Void-Struktur mehrere nebeneinander beabstandet angeordnete Elemente und gegebenenfalls eine obere Schicht, die oberhalb der Elemente der Void-Struktur aufgebracht ist und zwischen den Elementen der Void-Struktur die Substratschicht kontaktiert. Die Dipolantenne kontaktiert die obere Schicht.

Gemäß der Ausführungsform weist die Void-Struktur gewisse Haftungsverhältnisse zwischen den Schichten bzw. der Dipolantenne und dem Substrat auf, sodass, nachdem die Enden des Sicherheitsanhängers miteinander verklebt wurden, ein nachträgliches Ablösen durch Sichtbarmachung eines Void-Effekts feststellbar ist. Hierzu ist eine Haftkraft zwischen einem der Elemente der Void-Struktur und der Substratschicht geringer ausgebildet als eine Haftkraft zwischen der Dipolantenne und dem Klebstoff. Die vorgenannten Haftkräfte wiederum sind geringer als eine Haftkraft zwischen der Dipolantenne und der oberen Schicht oder einer Haftkraft zwischen der oberen Schicht und der Substratschicht oder einer Haftkraft zwischen der oberen Schicht und einem der Elemente der Void-Struktur. Dadurch wird bei einem Manipulationsversuch, bei dem die geklebten Enden der Banderole voneinander gelöst werden, erreicht, dass Teile der oberen Schicht und der Antenne aufgrund der unterschiedlichen Haft- oder Adhäsionskräfte teilweise an der Substratschicht und teilweise an der Klebstoffschicht haften. Insbesondere bleiben die Elemente der Void-Struktur an der Antenne haften, während diejenigen Teile der Antenne, die zwischen den Elementen der Void-Struktur positioniert sind, mit der Substratschicht bzw. dem unmittelbar mit der Substratschicht verbundenen Teil der oberen Schicht der Void-Struktur verbunden bleiben. Dies hat zur Folge, dass die Antenne durchtrennt wird. Ein Auslesen aus dem RFID-Transponder ist nur noch erschwert oder gar nicht mehr möglich, da sich aufgrund der beschädigten Antenne die elektrischen Verhältnisse geändert haben. Beispielsweise ist die Lesereichweite verringert. Optisch lässt sich das Anhaften von den Elementen der Void-Struktur, Teilen der oberen Schicht und Teilen der Dipolantenne an den verschiedenen Teilen der Banderole als Void-Effekt erkennen. Erfahrungsgemäß ist es nicht mehr möglich, die Banderole lagerichtig erneut zusammenzukleben. Selbst wenn dies gelingen könnte, wäre durch die verringerte Reichweite ein Auslesen des RFID-Transponders nur erschwert möglich und aufgrund dessen feststellbar.

Gemäß Ausführungsformen kann ein Halbleiterchip des RFID-Transponders mit einer Schleifenantenne kontaktiert sein, die ihrerseits wiederum mittels eines im Wesentlichen magnetischen Wirkfeldes mit der langgestreckten Dipolantenne in Wechselwirkung steht. Der RFID-Transponder kann einen weiteren Halbleiterchip umfassen, der vermittels einer weiteren Schleifenantenne mit der Dipolantenne gekoppelt ist. Bei einer zerstörten Dipolantenne aufgrund eines Manipulationsversuchs ist feststellbar, dass auf die unterschiedlichen Halbleiterchips nur mit unterschiedlicher Lesereichweite zugegriffen werden kann.

In anderen Ausführungsformen können mehrere Halbleiterchips des RFID-Transponders über ein Anpassungsnetzwerk anstelle einer Schleifenantenne an die Dipolantenne angeschlossen sein. Die Halbleiterchips können jeweils Daten speichern, die von den Daten, die im jeweils anderen Halbleiterchip gespeichert sind, abhängen und/oder darauf Bezug nehmen. Eine Vielzahl von Halbleiterchips kann längs der Dipolantenne verteilt angeordnet und an diese elektrisch und/oder magnetisch gekoppelt sein, wobei der Abstand der Halbleiterchips in etwa λ/4 beträgt (λ = Wellenlänge der Betriebsfrequenz).

Eine Anordnung des Sicherheitsanhänger an einem Körper umfasst gemäß einer Ausführungsform den Sicherheitsanhänger, der um die Umfangsfläche des Körpers gewickelt ist. Zweckmäßigerweise ist derjenige Teil des Sicherheitsanhängers, in dem sich der eine oder die mehreren Halbleiterchips des Sicherheitsanhängers befinden, so bemessen, dass er auf der Umfangsfläche des Körpers aufliegt, sodass weitere Teile des Sicherheitsanhängers zumindest teilweise miteinander verklebt werden können. Bei einem Manipulationsversuch würde dann die Dipolantenne an einem äußeren Teil zerstört werden, sodass eine Unsymmetrie im RFID-Transponder auftritt und ein Zugriff auf den einen Halbleiterchip erschwert wird oder sich bei einem Zugriff auf die mehreren Halbleiterchips eine unterschiedliche Lesereichweite ergibt. Mindestens ein Drittel der Länge der Dipolantenne sollte auf den Körper aufgewickelt sein.

Eine weitere Ausführungsform betrifft ein Verfahren zum Betreiben eines Sicherheitsanhängers, bei dem ein Kennzeichnungsmittel an einem Körper befestigt wird. Das Kennzeichnungsmittel weist optisch lesbare Informationen auf und ist beispielsweise ein weiterer Anhänger, der mit alphanumerischer und/oder Barcode-Information bedruckt ist. Der Sicherheitsanhänger wird ebenfalls am Körper aufgewickelt und endseitig miteinander verklebt, wobei im Halbleiterchip des Sicherheitsanhängers Information programmiert wird, die von der optisch lesbaren Information abhängt oder identisch zu der optisch lesbaren Information ist. Wenn die Klebeverbindung des Sicherheitsanhängers gelöst wird und die Dipolantenne aufgrund des Void-Effekts durchtrennt wird, ergibt sich eine unterschiedliche maximale Entfernung zwischen dem Sicherheitsanhänger und dem Lesegerät, mit der die programmierte Information aus dem Halbleiterchip des Sicherheitsanhängers gerade noch auslesbar ist. Im durchtrennten Zustand ist diese maximale Entfernung (Lesereichweite) zwei bis zehn Mal geringer, vorzugsweise fünf bis zehn Mal geringer, als im nicht durchtrennten, vollständig funktionsfähigen Zustand.

Dies bedeutet, dass ein intakter Sicherheitsanhänger aus wesentlich größerer Lesereichweite sicher auslesbar ist, sodass dadurch die optisch lesbare Information mit der im RFID-Transponder elektronisch gespeicherten Information vergleichbar ist, während bei manipuliertem Sicherheitsanhänger und dadurch zerstörter Dipolantenne bei gleichem Abstand zum Lesegerät fehlerhafte oder gar keine Information aus dem Halbleiterchip des RFID-Transponder auslesbar ist, so dass der Vergleich mit der nach wie vor optisch lesbaren Information nicht mehr erfolgreich ist.

### Kurze Beschreibung der Zeichnungen

Nachfolgend werden die vorgenannten Ausführungsformen und die Erfindung anhand der in der Zeichnung dargestellten Figuren näher erläutert. Gleiche oder einander entsprechende Elemente in verschiedenen Figuren sind mit gleichen Bezugszeichen versehen. Es zeigen:
- Figur 1: eine Banderole gemäß einer Ausführungsform;
- Figur 2: eine Seitenansicht der Banderole aus Figur 1;
- Figur 3: eine andere Ausführungsform einer Banderole in Seitenansicht;
- Figur 4: einen vergrößerten Ausschnitt aus der Banderole in Seitenansicht der Figur 2;
- Figur 5: eine Banderole gemäß einer weiteren Ausführungsform;
- Figur 6: eine Banderole gemäß einer wiederum weiteren Ausführungsform;
- Figur 7: eine Banderole gemäß einer wiederum weiteren Ausführungsform;
- Figur 8: eine Banderole gemäß einer Ausführungsform mit einer Vielzahl von Halbleiterchips im RFID-Transponder; und
- Figur 9: eine Banderole gemäß Figur 1, aufgewickelt auf einen Rundkörper.

### Detaillierte Beschreibung von Ausführungsformen

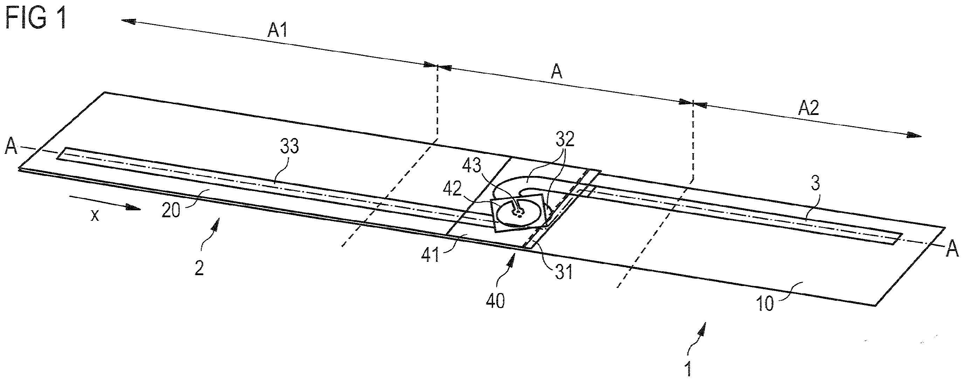

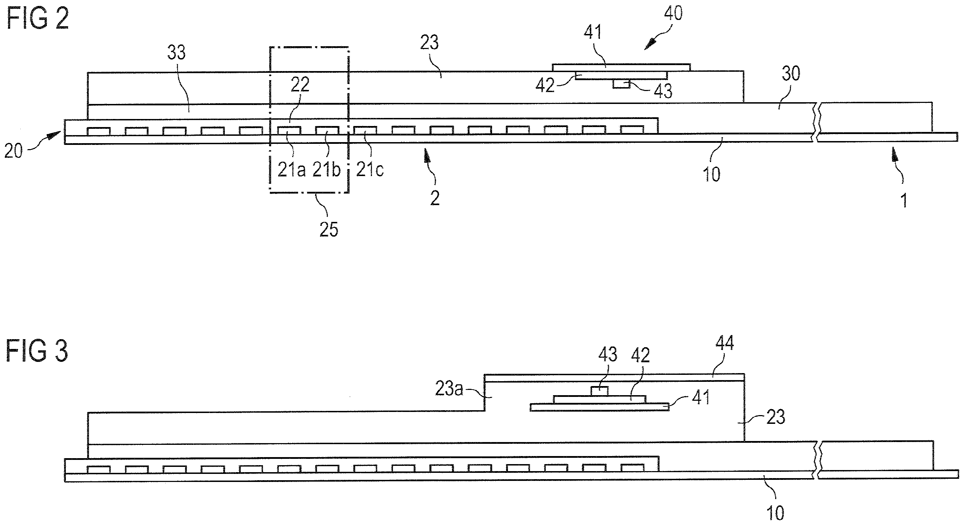

Die in den Figuren 1 und 2 dargestellte Ausführungsform zeigt einen Sicherheitsanhänger in Form einer Banderole vor dessen bestimmungsgemäßem Gebrauch in Aufsicht bzw. seitlich im Längsschnitt entlang der Schnittlinie A-A. Die dargestellte Banderole umfasst einen Abschnitt 2 sowie einen dazu komplementären Abschnitt 1. Im Abschnitt 2 befindet sich eine Void-Struktur, während im Abschnitt 1 diese Void-Struktur fehlt und nicht vorhanden ist. Es ist in einer anderen (nicht dargestellten) Ausführungsform möglich, die Void-Struktur ganzflächig auf dem gesamten Verlauf des Banderolensubstrats aufzubringen. Die Dipolantenne kontaktiert dann längs der gesamten Banderole die Void-Struktur. Weiterhin ist es bei dieser Ausführungsform möglich, die Void-Struktur nur in dem mit Klebstoff versehenen Bereich mit einem Void-Effekt im Fall es nachträglichen Lösens der Klebeverbindung wirksam werden zu lassen.

Die Banderole enthält weiterhin einen RFID-Transponder, von dem sich eine Antenne 30 in Form einer Dipolantenne nahezu längs der gesamten Länge der Banderole erstreckt (RFID: Radio Frequency Identification). In den rechts und links in Figur 1 dargestellten Bereichen der Dipolantenne 30 verläuft diese jeweils außerhalb der Mitte der Banderole in der Nähe und parallel zum Längsrand bzw. zur Längserstreckungsrichtung x. Etwa in dem auf die Länge der Banderole gesehenen mittleren Bereich der Banderole wechselt die Dipolantenne die Seitenlage, sodass dann, wenn die Banderole an einem Körper befestigt wird, indem das rechte und linke Ende der Banderole miteinander verklebt werden, von den beiden Abschnitten der Dipolantenne eine Fläche eingeschlossen wird, um elektromagnetischen Empfang und Abstrahlung und zu ermöglichen.

In diesem mittleren Bereich weist die Dipolantenne eine Art S-Form 32 auf. Dort befindet sich der Halbleiterchip des Transponders, der in dieser Ausführungsform wie weiter unten erläutert mittels einer primären Schleifenantenne an die sekundär wirkende Dipolantenne gekoppelt ist. Der Halbleiterchip samt Primärschleifenantenne wird in Form eines Transponder-Inlays 40 während der Herstellung der Banderole bereitgestellt und im Bereich der S-Form 32 der Dipolantenne so eingesetzt, dass er innerhalb eines U-förmigen Abschnitts 31 der Dipolantenne liegt.

Im in Figur 1 links dargestellten Abschnitt 2 der Banderole sind Dipolantenne 33 sowie Transponder-Inlay 40 oberhalb der Void-Struktur 20 angeordnet. Im übrigen Teil 1 der Banderole, der rechts in Figur 1 dargestellt ist, ist die Dipolantenne direkt auf dem Banderolensubstrat 10 aufgebracht, wobei eine Void-Struktur zwischen Dipolantenne 30 und Banderolensubstrat 10 fehlt. Der Abschnitt 2 erstreckt sich mindestens bis zur Hälfte der gesamten Länge in Richtung x der Banderole. In der anderen genannten Ausführung ist die Void-Struktur auf dem gesamten Banderolensubstrat aufgebracht und erstreckt sich über die beiden dargestellten Abschnitte 1 und 2 gleichermaßen.

Das Transponder-Inlay 40 umfasst im Speziellen den Halbleiterchip 43, der im Zentrum einer Primärschleifenantenne 42, die als kreisabschnittsförmige Spule ausgebildet ist, angeordnet ist und elektrisch an diese Primärschleifenantenne gekoppelt ist. Die Primärschleifenantenne ist beispielsweise durch Ätzen oder Stanzen aus einer leitfähigen Schicht oder drucktechnisch aus einer leitfähigen druckbaren Paste oder einer leitfähigen Druckfarbe hergestellt. Die kreisabschnittsförmige Primärschleifenantenne überlagert einen bogenförmigen, beispielsweise U-förmigen Teil 31 im Wechselabschnitt 32 der Dipolantenne, um mittels elektromagnetischer, im Wesentlichen magnetischer Kopplung ein Wirkfeld mit der Dipolantenne auszutauschen.

Gemäß der üblichen Funktion eines Transponderschwingkreises wird im Betrieb elektromagnetische Energie aus einem externen elektromagnetischen Feld von der Dipolantenne aufgenommen, sodass diese mit einer Eigenfrequenz schwingt. Die in der Dipolantenne angeregte Schwingung wird über die U-förmige Schleife 31 der Dipolantenne an die kreisförmige Primärschleifenantenne 42 mittels magnetischer Kopplung übertragen. Der Halbleiterchip 43 bezieht daraus durch Gleichrichtung seine Betriebsspannung und erkennt dem externen Wechselfeld aufmodulierte Signale. In umgekehrter Richtung kann auch eine Datenübertragung vom Halbleiterchip über Primärschleifenantenne und sekundärer Dipolantenne an die Umgebung abgegeben werden, in der sie von einem in der Nähe befindlichen Lesegerät detektiert wird. Das Transponder-Inlay 40 wird beispielsweise vorkonfektioniert bereitgestellt und mit den restlichen Strukturen, die beispielsweise drucktechnisch auf das Banderolensubstrat 10 aufgebracht sind, verbunden. Optional kann oberhalb des Transponder-Inlays 40 eine Chipbereichsabdeckung 41 vorgesehen sein.

Die Void-Struktur 20 wird anhand des in Figur 2 dargestellten Querschnitts näher erläutert. Die Void-Struktur 20 umfasst unmittelbar auf dem Banderolensubstrat 10 aufgebrachte Elemente 21a, 21b, 21c, die voneinander beabstandet auf dem Banderolensubstrat 10 in die Zeichenebene hinein verlaufen. Die Elemente 21a, 21b, 21c, von denen eine Vielzahl solcher im Bereich der Fläche der Void-Struktur vorhanden sind, verlaufen ihrerseits beispielsweise parallel zueinander und etwa diagonal zur Längsausdehnungsrichtung x der Banderole. Da im Bereich der Void-Struktur 20 der entsprechende Abschnitt der Dipolantenne ebenfalls parallel zur Längsrichtung x der Banderole verläuft, bildet der Verlauf der Elemente 21a, 21b, 21c einen spitzen Winkel mit dem Verlauf der Dipolantenne, verläuft also quer zur Dipolantenne. Die Elemente 21a, 21b, 21c sind drucktechnisch auf das Banderolensubstrat 10 aus einem Polymermaterial, z.B. PET aufgebracht und sind beispielsweise aus einer Druckfarbe gebildet, sogenannte Void-Struktur-Farbe.

Die Elemente 21a, 21b, 21c der Void-Struktur sind von einer oberen Schicht 22 bedeckt. Die obere Schicht 22 befindet sich oberhalb der Elemente 21a, 21b, 21c und über deren Oberseite und berührt im Zwischenraum zwischen den Elementen 21a, 21b, 21c das Banderolensubstrat 10. Die obere Schicht 22 kann ebenfalls als Druckfarbe auf das Banderolensubstrat 10 bzw. die Elemente 21a, 21b, 21c aufgedruckt sein, sogenannte Void-Überdruck-Farbe. Es prinzipiell sind auch Ausgestaltungen denkbar, in denen die obere Schicht 22 bzw. die Void-Überdruck-Farbe nicht vorhanden ist und fehlt. Dann kontaktiert die Antenne die Elemente aus Void-Struktur-Farbe und das Banderolensubstrat im Zwischenraum zwischen den Elementen aus Void-Struktur-Farbe jeweils direkt.

Wie in Figur 2 dargestellt, befindet sich die Dipolantenne in ihrem links dargestellten Bereich 33 oberhalb der Void-Struktur 20. Eine bezüglich des Substrats oder bezüglich der Antenne senkrecht gedachte Linie schneidet das Substrat, eines der Elemente 21a, 21b oder 21c, die obere Schicht 22 und den Abschnitt 33 der Dipolantenne. Im rechts dargestellten Abschnitt 30 der Dipolantenne verläuft die Dipolantenne direkt auf dem Banderolensubstrat 10. Die Dipolantenne wird zweckmäßigerweise ebenfalls drucktechnisch als leitfähige Druckfarbe aufgebracht.

Im linken Bereich 33 der Banderole oberhalb der Void-Struktur 20 ist ein Klebstoff 23 aufgebracht. Der Klebstoff 23 dient dazu, dass wenn die Banderole um einen Körper gelegt oder um ihn gewickelt wird, die beiden Enden miteinander verklebt werden können. Zweckmäßigerweise reicht es, nur an einem Ende bzw. an einer Hälfte der Banderole Klebstoff vorzusehen. Möglich ist auch, dass die gesamte Banderolenoberfläche mit Klebstoff versehen ist. Im dargestellten Ausführungsbeispiel ist die Oberfläche der Banderole, die sich vom linken Rand bis über das Transponder-Inlay 40 erstreckt mit Klebstoff beschichtet. Der sich daran anschließend weiter nach rechts in der Darstellung der Figuren 1 und 2 erstreckende Bereich trägt keinen Klebstoff. Zweckmäßigerweise sind die Flächen mit Klebstoff 23 und die Fläche, die von der Void-Struktur 20 eingenommen wird, deckungsgleich oder nahezu deckungsgleich.

Das Transponder-Inlay 40 ist, wie in Figur 2 gezeigt, mit dem Chip nach unten, also in Orientierung zum Banderolensubstrat 10 hin, eingesetzt, sodass sich zur oberen Oberfläche hin das Inlay-Substrat 41 befindet, welches aus PET gebildet sein kann. Das Transponder-Inlay 40 ist hierbei in die Klebstoffschicht 23 eingebettet.

In einer anderen, in Figur 3 dargestellten Ausführungsform ist das Transponder-Inlay in umgekehrter Orientierung dargestellt, indem das Inlay-Substrat 41 nach unten hin, also orientiert in Richtung zum Banderolensubstrat 10 hin liegt. Darüber ist die primäre Schleifenantenne 42 und wiederum darüber, also am weitesten abgewandt von dem Banderolensubstrat 10, ist der Halbleiterchip 43 des Transponder-Schaltkreises angeordnet. Sämtliche Elemente des Primärtransponderschwingkreises sind von einer zusätzlichen Klebstoffschicht 23a bedeckt. Um den Halbleiterchip 43 vor mechanischer Beschädigung zu schützen, ist eine Abdeckung 44 aus einem Polymermaterial vorgesehen, die sämtliche Elemente des Primärschwingkreises abdeckt sowie die sich daran anschließende nähere Umgebung.

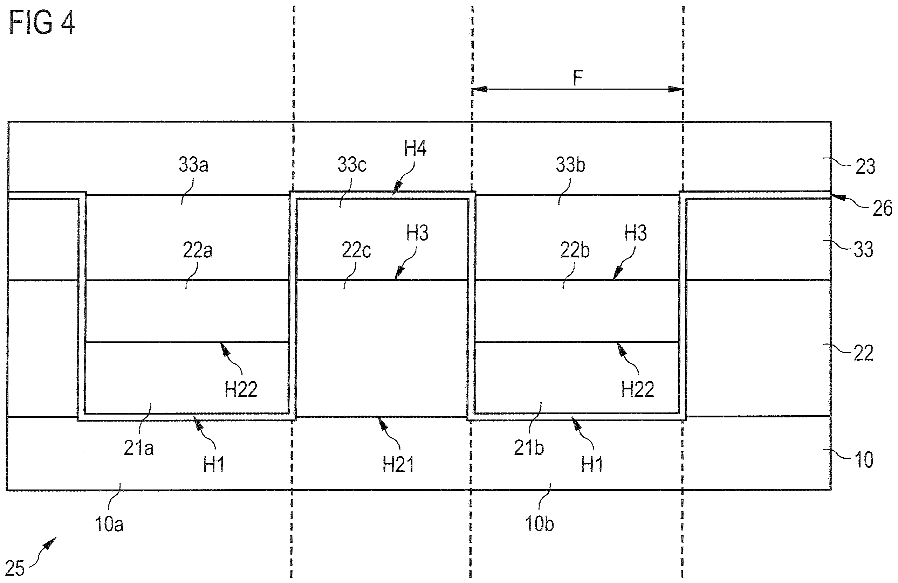

In Figur 4 ist ein vergrößerter Ausschnitt 25 der in Figur 2 dargestellten Querschnittsansicht wiedergegeben, um anhand dessen die Haftkräfte der verschiedenen Schichten zueinander und daraus resultierend die gewünschte Funktion der Void-Struktur im Zusammenwirken mit den anderen Elementen der Banderole zu erläutern. Prinzipiell sollen die Haftkräfte der einzelnen Schichten so aufeinander abgestimmt sein, dass, wenn die Enden der Banderole miteinander verklebt sind und anschließend die Banderole aufgerissen wird, einerseits ein Teil der Void-Struktur an der Dipolantenne 33 haften bleibt und andererseits ein anderer Teil der Void-Struktur am Banderolensubstrat 10 haften bleibt. Dadurch wird erreicht, dass einerseits die Dipolantenne 33 durchtrennt und die elektrische Funktion des Transponders beeinträchtigt wird und andererseits aufgrund der unterschiedlich verwendeten Druckfarben Farbkontraste entstehen. Selbst wenn dann die Banderole wieder lagegenau zusammengeklebt würde, wäre einerseits mit hoher Wahrscheinlichkeit die elektrische Leitfähigkeit innerhalb der Dipolantenne immer noch unterbrochen und andererseits würde es mit hoher Wahrscheinlichkeit kaum mehr gelingen, die an unterschiedlichen Enden der Banderole haftenden Teilbereiche der Void-Struktur so zusammenzusetzen, dass die Struktur wieder vollständig ursprüngliches Aussehen hätte.

Die Elemente aus Void-Struktur-Farbe 21a, 21b, 21c wirken als Adhäsionskrafteinstellmittel, indem die Haftkraft zwischen Void-Überdruck-Farbe 22 und Banderolensubstrat 10, die an sich relativ hoch ist, im Bereich der Elemente aus Void-Struktur-Farbe 21a, 21b, 21c verringert ist. Die Elemente aus Void-Struktur-Farbe 21a, 21b, 21c haben eine geringere Adhäsion am Banderolensubstrat 10 als die Void-Überdruck-Farbe 22. Die Elemente aus Void-Struktur-Farbe bewirken auf diese Weise eine Adhäsionskraft verringernde Wirkung, so dass ein Farbschicht-Trennungseffekt in der Void-Überdruck-Farbschicht 22 erzielt wird. Beim Aufreißen der Banderole wird die Void-Überdruck-Farbe 22 und die Dipolantenne 33 entsprechend dem Muster der Elemente der Void-Struktur-Farbe 21a, 21b, 21c getrennt.

Im allgemeinen ist das Verhältnis der Adhäsionskräfte mit denen einerseits die Elemente aus der Void-Struktur-Farbe an dem Substrat haften und andererseits die Void-Überdruck-Farbe an der Dipolantenne haften in der Weise beeinflusst, dass stellenweise die Haftkraft zu der einem von Substrat und Dipolantenne größer als zum anderen von Substrant und Dipolantenne ist, so dass bei der Trennung von Dipolantenne und Substrat die Void-Überdruck-Farbe entsprechend einem bestimmten Muster geteilt wird, so dass ein Teil der Void-Überdruck-Farbe mit dem Substrat verbunden ist und der restliche Teil mit der Dipolantenne verbunden ist.

Im einzelnen hat im Beispiel der dargestellten Ausführungsform die Void-Strukturfarbe 21a, 21b gegenüber dem Banderolensubstrat 10 aus PET-Material eine Haftkraft H1. Die Void-Überdruck-Farbe 22 hat gegenüber den Void-Strukturfarbe-Elementen 21a, 21b eine Haftkraft H22. Die Void-Überdruck-Farbe 22 hat weiterhin gegenüber dem Banderolensubstrat 10 eine Haftkraft H21. Schließlich besteht eine Haftkraft H3 zwischen der gedruckten Dipolantenne 33 und der Void-Überdruck-Farbe 22. Zwischen dem Adhäsivklebstoff 23 und der gedruckten Dipolantenne 33 besteht eine Haftkraft H4. Zweckmäßigerweise haben die Druckschichten haben eine Dicke von etwa 10 µm, und die Längsausdehnung F eines Elements 21a, 21b der Void-Struktur-Farbe hat im dargestellten Querschnitt etwa eine Ausdehnung von 1 mm.

Nunmehr sind die Haftkräfte wie folgt eingestellt, was durch geeignete Materialwahl der gedruckten Elemente möglich ist:
Haftkraft H1 < Haftkraft H4 < eine der Haftkräfte H21, H22, H3

Mit dieser Relation der Haftkräfte entsteht, wenn an den Adhäsivklebstoff 23 ein weiteres Substrat oder das andere Ende der Banderole mit hoher Haftkraft angeklebt wird, beim Auseinanderziehen der Struktur eine Trennlinie längs der Linie 26. Dies bedeutet, dass die Void-Struktur-Farbenelemente 21a, 21b mit überwiegender Wahrscheinlichkeit vom Banderolensubstrat 10 abreißen, sodass Elemente 33a, 33b der Dipolantenne 33 sowie 22a, 22b der Void-Überdruck-Farbe 22 zusammen an der Adhäsivklebstoffschicht 23 haften bleiben. Andererseits bleiben das Element 22c der Void-Überdruck-Farbe 22 sowie das Element 33c der Dipolantenne 33 im Bereich zwischen den Void-Struktur-Farbenelementen 21a, 21b weiterhin an dem Banderolensubstrat 10 haften.

Dies bewirkt ein optisch erkennbares Void-Bild, indem dort, wo die Void-Überdruck-Farbe 22 am Klebstoff 23 haftet, nämlich im Bereich der Void-Struktur-Farbenelemente 21a, 21b, nur die weitgehend transparenten Abschnitte 10a, 10b des Banderolensubstrats 10 an diesem sichtbar sind, während dort, wo die Void-Überdruck-Farbenabschnitte 22c noch am Banderolensubstrat 10 haften bleiben, die entsprechenden Abschnitte der Void-Überdruck-Farbe am Banderolensubstrat 10 sichtbar bleiben. Im Prinzip könnte die Void-Überdruck-Farbe 22 auch weggelassen werden. Wenn die Void-Überdruck-Farbe 22 vorhanden ist, sind die Farbkontrastverhältnisse besser erkennbar.

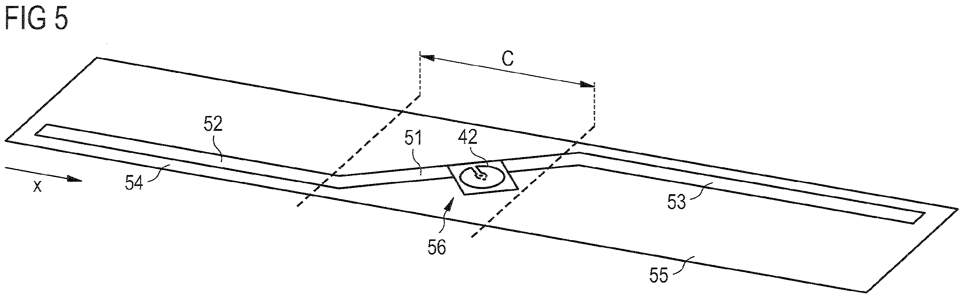

In der Figur 5 ist eine weitere Ausführungsform einer Banderole mit Primärschleifen-Inlay gezeigt. Im Wechselabschnitt 51 verläuft die Dipolantenne im Wesentlichen diagonal zur Längsausdehnungsrichtung x der Banderole. Im Abschnitt 52 ist die Dipolantenne relativ nahe am unten dargestellten Rand 54 der Banderole angeordnet. Im Abschnitt 53 ist die Dipolantenne relativ nahe am oben dargestellten Rand 55 der Banderole angeordnet. Dazwischen befindet sich der Wechselabschnitt 51 der Dipolantenne. Innerhalb dieses Abschnitts 51 verläuft (überdeckt) eine einen möglichst kreisförmigen Abschnitt bildende Schleife 56 der Dipolantenne, oberhalb derer die kreisförmige Windung der Primärschleifenantenne 42 verläuft.

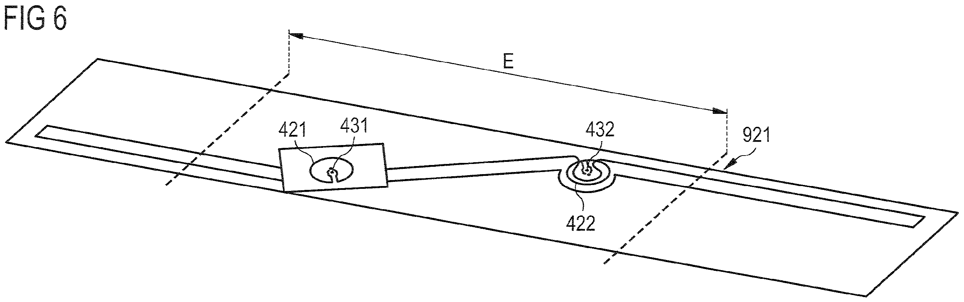

In Figur 6 ist ein Transponder mit mehr als einem, nämlich zwei Halbleiterchips dargestellt, die jeweils über eine Primärschleifenantenne 421 bzw. 422 mit der Dipolantenne gekoppelt sind. Dabei liegen die Primärschleifenantennen jeweils über einer entsprechenden Schleife der Dipolantenne, die beispielsweise als Kreisabschnitt geformt sind, um wechselseitig miteinander durch ein weitgehend magnetisches Wirkfeld zu koppeln.

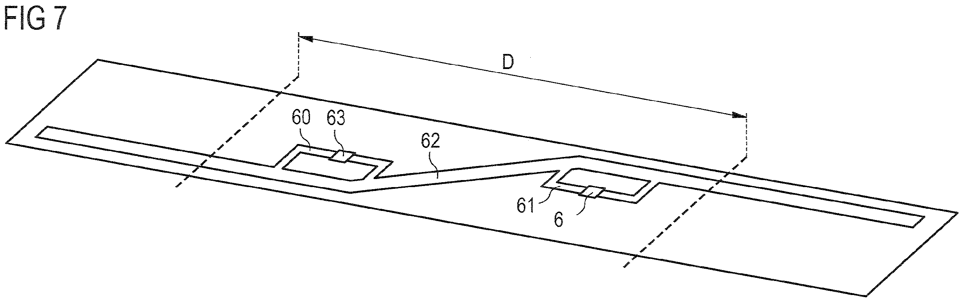

In Figur 7 ist eine wiederum weitere Ausführungsform dargestellt, bei der die Halbleiterchips im Unterschied zur Figur 6 nicht mittels Schleifenantenne, sondern über je ein Anpassungsnetzwerk 60, 61 mit der Dipolantenne gekoppelt sind. Die Anpassungsnetzwerke befinden sich am Ende der Wechselzone 62. Hierzu ist ein jeweiliger Halbleiterchip 63, 64 an ein Anpassungsnetzwerk angeschlossen. Das Anpassungsnetzwerk ist als eine U-förmig verlaufende Leiterbahnen, an die der Halbleiterchip kontaktiert ist, ausgebildet. Die jeweiligen Enden der U-förmigen Leiterbahnen sind an die Dipolantenne angeschlossen.

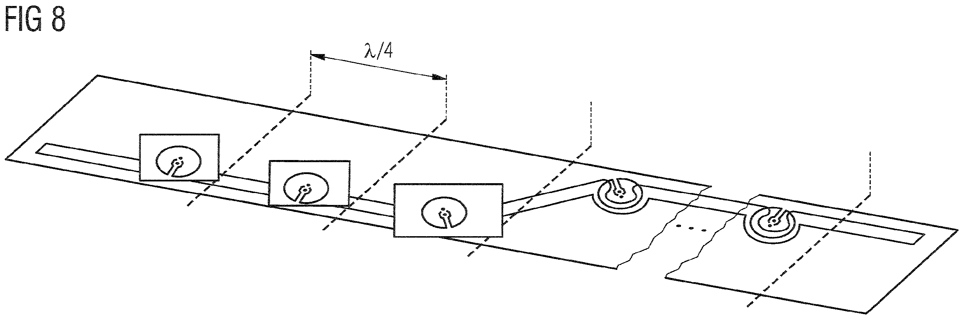

In Figur 8 ist eine Banderole mit einem Transponder-Schaltkreis dargestellt, der eine Vielzahl von Halbleiterchips aufweist, die jeweils über eine Primärschleifenantenne mit der Dipolantenne gekoppelt sind. Zweckmäßigerweise befinden sich die Halbleiterchips bzw. die Einkoppelstellen für die Primärschleifenantennen im Abstand λ/4 voneinander, wobei λ die Wellenlänge der Eigenschwingung im RFID-Schwingkreis bzw. in der Dipolantenne der Banderole bei einer Betriebsfrequenz des Systems von etwa 900 MHz beträgt. In der Praxis beträgt der Abstand λ/4 zwischen zwei Halbleiterchips etwa 60 bis 75 mm. Dies berücksichtigt den dielektrischen Einfluss des Substrats und der anderen Komponenten der Banderole, wodurch die Wellenlänge aufgrund der dielektrischen Einflüsse der Gesamtanordnung gegenüber der theoretisch im Vakuum vorliegenden Wellenlänge verringert ist.

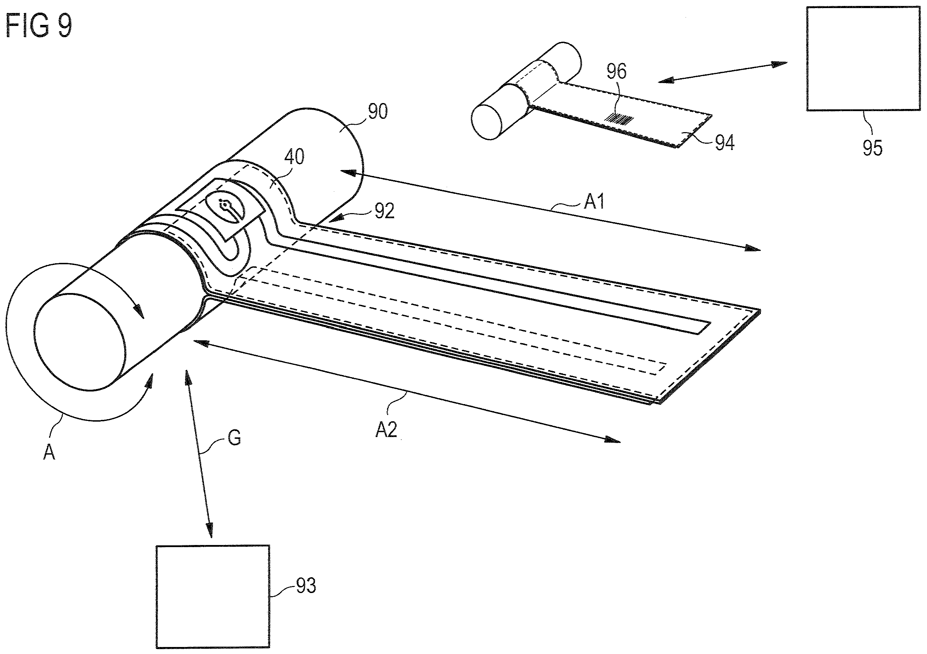

In Figur 9 ist die Anwendung einer Banderole gemäß den vorliegenden Ausführungsformen dargestellt. Die Banderole ist um einen Körper 90 gewickelt. Der Körper 90 ist in der gezeigten Darstellung ein Rundkörper, andere Formen sind ebenfalls möglich. In der Praxis könnte der Körper 90 der Tragegriff eines Gepäckstücks sein oder ein anderes Element an einem Gepäckstück. Der mittlere Bereich A (siehe auch Figur 1) ist um den Körper 90 gewickelt. Dabei ist die Länge des Abschnitts A etwa so groß, dass sie weitgehend gleich dem Umfang des Körpers 90 ist. Außerhalb des Abschnitts A sind die beiden endseitigen Abschnitte A1, A2 der Banderole miteinander mittels des Adhäsivklebstoffs 23 verklebt. Die Banderole sitzt damit relativ sicher auf dem Körper 90. Insbesondere liegt das Transponder-Inlay 40 auf dem Körper auf.

Wenn nun missbräuchlich versucht würde, die Banderole vom Körper 90 zu entfernen, könnten folgende Effekte eintreten. Einerseits könnten die Abschnitte A1, A2 voneinander gelöst werden, wodurch der in Zusammenhang mit den Figuren 2 und 4 beschriebene Void-Effekt sichtbar würde. Durch den Void-Effekt wird außerdem mit hoher Wahrscheinlichkeit die Dipolantenne im Bereich A1 durchtrennt, sowohl am endseitigen Ende von A1 als auch am in der Nähe des Körpers 90 befindlichen Ende 92 des Abschnitts A1. Die elektrisch wirksame Länge der Antenne wäre dadurch verringert, sodass anstelle des ursprünglich hinsichtlich der Längsausdehnung der Dipolantenne relativ mittig angeordneten Transponder-Inlays 40 eine elektrische Unsymmetrie nach Öffnen der verklebten Banderole entstehen würde.

Eine andere missbräuchliche Handhabung könnte darin bestehen, dass im Bereich 92 die Banderole mit einem Schneidewerkzeug durchtrennt wird. Auch dann wäre die Antenne im Bereich der Stelle 92 unterbrochen, sodass die elektrisch wirksame Länge des Dipols verringert wäre und relativ zum Transponder-Inlay 40 eine elektrische Unsymmetrie entsteht. Bei einer typischen Betriebsfrequenz von 900 MHz hat die Dipolantenne unter Berücksichtigung der dielektrischen Einflüsse der Schichten innerhalb der Banderole eine typische Länge von 120 bis 170 mm, also die Abschnitte A, A1 und A2 in Summe betragen in diesem Fall 120 bis 170 mm. Zweckmäßigerweise kann in der Praxis die Länge der Dipolantenne zwischen 120 bis 150 mm liegen. Etwa zwei Drittel (2/3) der Länge der Banderole stehen für den Bereich A zur Verfügung, so dass die zu verklebenden Enden A1, A2 jeweils etwa ein Sechstel (1/6) der Länge umfassen, wodurch ein signifikanter Abfall der Lesereichweite bei Zerstörung der Dipolantenne im Bereich der jeweiligen Abschnitte A1, A2 erzielt wird. Wenn der innere Abschnitt A etwa 1/3 der Länge der Banderole umfasst und die äußeren Abschnitte A1, A2 jeweils 1/3 der Länge der Banderole, ist der Abfall der Lesereichweite bzw. das Kontrastverhältnis zwischen Lesereichweite im unbeschädigten Zustand zum beschädigten Zustand dennoch ausreichend erhöht und dadurch elektronisch feststellbar.

Wenn nun die auf diese Weise geöffnete Banderole anderweitig verwendet werden würde, könnte dies durch eine Verringerung in der Lesereichweite von einem Lesegerät, das versucht, im Halbleiterchip des RFID-Transponders gespeicherte Daten zu lesen, festgestellt werden. Beispielsweise befindet sich ein Lesegerät 93 im Abstand G vom Transponder, wobei der Abstand G in Figur 9 nicht maßstäblich dargestellt ist. Der Abstand G sei derjenige maximale Abstand, bei dem gerade noch ein Datenverkehr mit dem Transponder möglich ist. Bei durch Auslösen des Void-Effekts beschädigter Dipolantenne ist die Dipolantenne nicht mehr in der Lage, ausreichend elektrische Energie aus dem vom Lesegerät 93 erzeugten elektromagnetischen Wirkfeld zu entnehmen. Dadurch nimmt die Lesereichweite einer zerstörten Banderole ab. Bei den beschriebenen Größenverhältnissen, von beispielsweise 900 MHz Betriebsfrequenz, Länge der Dipolantenne 120 bis 150 mm, ein Drittel der Länge der Banderole aufgewickelt auf den Körper, entsteht ein Sensitivitätsverlust beim Zugriff des Lesegeräts 93 auf die Banderole, bei dem das Verhältnis der Lesereichweite von verletzter/unverletzter Banderole zwischen 1:2 bis 1:10, mindestens aber im Bereich von 1:5 bis 1:10 liegen. Dies bedeutet, dass die maximale Entfernung zwischen der Banderole und dem Lesegerät 93, mit dem die im Halbleiterchip des Transponder-Inlays 40 programmierte Information gerade noch lesbar ist, im durchtrennten Zustand im Bereich von 2 bis 10 Mal bzw. 5 bis 10 Mal geringer ist als im nicht durchtrennten Zustand der Dipolantenne der Banderole. Wenn ein Lesegerät in einem Logistikprozess, beispielsweise bei der Gepäckbeförderung abgefertigten Gepäcks in einem Flughafen, so eingestellt ist, dass die Information von Banderolen von vorbei laufenden Gepäckstücken im unverletzten Zustand noch möglich ist, dann ist eine vorbei laufende beschädigte Banderole dadurch erkennbar, dass sie nicht mehr vom Lesegerät lesbar ist. Das Gepäckstück kann aussortiert werden und manuell weiter untersucht werden. Dabei lässt sich die Art der Manipulation durch einen ausgelösten Void-Effekt erkennen.

In einer weiteren Anwendung kann die Banderole wie in Figur 9 weiterhin dargestellt mit einer weiteren Banderole 94 kombiniert werden, die mit dem gleichen Gepäckstück gekoppelt ist. Auf der weiteren Banderole 94 befindet sich optisch lesbare Information. Dies kann beispielsweise Logistikinformationen sein, wie Flugnummer, Flugdestination, Besitzer des Gepäckstücks etc., die mit alphanumerischen Zeichen und/oder Barcode 96 auf der weiteren Banderole aufgebracht sind. Nunmehr kann die optisch lesbare Information teilweise oder vollständig im Halbleiterchip des RFID-Transponders der RFID-Banderole gespeichert sein. Wenn im Logistikprozess ein weiteres Lesegerät 95 für die optische Erkennung der Information 96 auf der weiteren Banderole 94 vorliegt, kann diese optisch erfasste Information mit der vom RFID-Lesegerät 93 erfassten Information verglichen werden. Wenn festgestellt wird, dass beide Informationsinhalte gleich sind, kann davon ausgegangen werden, dass die Banderolen nicht ausgetauscht wurden bzw. die RFID-Banderole nicht beschädigt wird. Wenn festgestellt wurde, dass die Daten der beiden Banderolen voneinander abweichen, ergibt dies Anlass zu weiteren manuell durchführbaren Inspektionen. Die RFID-Banderole sowie das entsprechende Lesegerät 93 lassen sich problemlos in den vorhandenen Logistikprozess, der bereits Lesegerät 95 und optische Banderole 94 nutzt, zusätzlich integrieren.

Eine weitere Anwendung des Sicherheitsanhängers bzw. der Banderole gemäß der vorliegenden Anwendung wird anhand von Figur 6 erläutert. Hierbei werden die Logistikdaten, die in einem der Halbleiterchips eines der Transponder-Inlays, z.B. 431 gespeichert sind, im Halbleiterchip des anderen Transponder-Inlays, z.B. 432 von dem im Halbleiterchip 431 gespeicherten Daten abhängig gespeichert. Beispielsweise können die vollständigen Logistikdaten verteilt, also teilweise in einem der Halbleiterchips und teilweise im anderen der Halbleiterchips gespeichert sein, sodass sich die vollständige Logistikinformation nur dann ergibt, wenn die Daten aus beiden Halbleiterchips vollständig auslesbar sind. Andererseits können Daten, die in einem Halbleiterchip gespeichert sind, auch im anderen Halbleiterchip gespeichert sein, direkt oder mittels einer entsprechenden Codierung, sodass beim Auslesen beider Halbleiterchips die Daten miteinander verglichen werden können und davon abhängig festgestellt werden kann, ob die Daten vollständig aus beiden Halbleiterchips auslesbar sind. Weiterhin kann ein Identifikationskennzeichen des Chips 431 im Chip 432 gespeichert sein und/oder umgekehrt. Wenn festgestellt wird, dass eines der Identifikationskennzeichen des nicht mehr lesbaren Chips fehlt, deutet dies auf eine verletzte Banderole hin.

Wenn die Banderole beispielsweise am Rand des Bereichs E oder außerhalb des Bereichs E beschädigt wurde, mittels Schneidwerkzeug oder durch Auslösen des Void-Effekts, sodass die Antenne zerstört ist, dann sind entweder beide Halbleiterchips nicht mehr vollständig auslesbar oder aber nur einer der Halbleiterchips ist auslesbar, während der andere Halbleiterchip nicht mehr auslesbar ist. Wenn beispielsweise die Dipolantenne an der Stelle 921 durchtrennt ist, könnte der Zustand auftreten, dass aufgrund der erhöhten Unsymmetrie im Bereich der Schleifenantenne 422 dort die Lesereichweite erheblich verringert ist, während an der Schleifenantenne 421 zwar auch eine gewisse Unsymmetrie vorliegt, diese jedoch noch so weit ausreicht, aus dem zur Schleifenantenne 421 gehörenden Halbleiterchip 431 die Daten aufgrund ausreichender Lesereichweite noch auszulesen. Durch einen Vergleich der von den Halbleiterchips 431, 432 ausgelesenen Daten kann festgestellt werden, ob eine Manipulation an der Banderole vorliegt.

Schließlich können die vorgenannten Maßnahmen einer verteilten Speicherung von Logistikdaten in mehreren Chips des Transponder-Schaltkreises auch anhand der in Figur 8 dargestellten Ausführungsform, bei der eine Vielzahl von Halbleiterchips im Abstand von λ/4 angeordnet sind, entsprechend verallgemeinert und weitergeführt werden. In diesem Fall weist die Dipolantenne eine Länge auf, die (n + 1)^{∗}λ/4 beträgt, wobei n die Anzahl der Primärtransponder ist. Dabei ist es möglich, in einer solchen gestreckten Antenne Teilbereiche der Antenne auf Unterbrechung zu überwachen. Der zu der Unterbrechung als nächstes angeordnete Primärtransponder wird über größere Distanzen schwerer bzw. nicht mehr lesbar sein, während die übrigen Transponder noch mit der üblichen Lesereichweite lesbar sind. Anwendbar ist eine solche Banderole, wenn größere Umfänge eines Körpers gesichert werden müssen.

## Patentansprüche

1. RFID-Transponderanordnung, umfassend:
- eine Substratschicht (10);
- eine auf der Substratschicht aufgebrachte Void-Struktur (20), die eine Haftkraft verringernde beabstandete Adhäsionskrafteinstellmittel (21a, 21b, 21c) umfasst;
- einen oberhalb der Substratschicht (10) aufgebrachten RFID-Transponder, der mindestens einen Halbleiterchip (43) und eine Dipolantenne (30) umfasst;
- wobei der RFID-Transponder ein Inlay (40) umfasst, das den mindestens einen Halbleiterchip (43) und eine Schleifenantenne (42) enthält, an die der Halbleiterchip (43) kontaktiert ist, wobei sich die Schleifenantenne (42) und ein Abschnitt der Dipolantenne (30) überlagern.

2. RFID-Transponderanordnung nach Anspruch 1, bei dem die Dipolantenne (30) eine Längsausdehnung aufweist und die Void-Struktur mehrere nebeneinander beabstandet angeordnete Elemente (21a, 21b, 21c) und eine obere Schicht (22), die oberhalb der Elemente (21a, 21b, 21c) der Void-Struktur aufgebracht ist und zwischen den Elementen der Void-Struktur die Substratschicht (10) kontaktiert, umfasst, wobei die Dipolantenne (30) die obere Schicht kontaktiert.

3. RFID-Transponderanordnung nach Anspruch 2, bei dem die Elemente (21a, 21b, 21c) bewirken, dass stellenweise eine Haftkraft zwischen einem von Substratschicht (10) und Dipolantenne (30) größer ist als zum anderen von Substratschicht (10) und Dipolantenne (30).

4. RFID-Transponderanordnung nach Anspruch 2 oder 3, bei dem oberhalb der oberen Schicht (22) eine Klebstoffschicht (23) aufgebracht ist, mit dem die RFID-Transponderanordnungim Bereich eines Teilabschnitts (2) der RFID-Transponderanordnungmit einem anderen Teil der RFID-Transponderanordnungim Bereich außerhalb (1) des Teilabschnitts verklebt werden kann.

5. RFID-Transponderanordnung nach Anspruch 4, bei dem eine Haftkraft (H1) zwischen einem der Elemente (21a, 21b, 21c) der Void-Struktur und der Substratschicht (10) geringer ist als eine Haftkraft (H4) zwischen der Dipolantenne (30) und der Klebstoffschicht (23) und bei dem die vorgenannten Haftkräfte (H1, H4) wiederum geringer sind als eine Haftkraft (H3) zwischen der Dipolantenne (30) und der oberen Schicht (22) oder (H21) zwischen der oberen Schicht (22) und der Substratschicht (10) oder (H22) zwischen der oberen Schicht (22) und einem der Elemente der Void-Struktur (21a, 21b).

6. RFID-Transponderanordnung nach Anspruch 1, bei dem die Void-Struktur (20) in einem Abschnitt (2) der Substratschicht (10) aufgebracht ist und die Dipolantenne (30) außerhalb des Abschnitts die Substratschicht (10) unter Weglassen der Void-Struktur kontaktiert.

7. RFID-Transponderanordnung nach einem der Ansprüche 1 bis 6, bei dem die Schleifenantenne (42) mittels eines im wesentlichen magnetischen Wirkfeldes mit der Dipolantenne (30) gekoppelt ist.

8. RFID-Transponderanordnung nach Anspruch 7,
dem der RFID-Transponder mindestens einen weiteren Halbleiterchip (432) umfasst, der an eine Schleifenantenne (422) kontaktiert ist, die ihrerseits mittels eines elektrischen Wirkfeldes mit der Dipolantenne gekoppelt ist, wobei die Dipolantenne in einem Überlappungsbereich von Schleifenantenne und Dipolantenne ihrerseits eine Schleife umfasst.

9. RFID-Transponderanordnung nach einem der Ansprüche 1 bis 6, bei dem der RFID-Transponder einen ersten Halbleiterchip (63) und mindestens einen zweiten Halbleiterchip (64) umfasst, die an je ein Anpassungsnetzwerk (60, 61) kontaktiert sind, wobei jedes Anpassungsnetzwerk mit der Dipolantenne (62) verbunden ist.

10. RFID-Transponderanordnung nach Anspruch 8 oder 9,
bei dem im Betrieb Daten, die in einem der Halbleiterchips (431) des RFID-Transponders gespeichert sind, abhängig sind von Daten, die im anderen der Halbleiterchips (432) des RFID-Transponders gespeichert sind.

11. RFID-Transponderanordnung nach einem der Ansprüche 1 bis 10, bei dem die Dipolantenne ausgelegt ist, bei einer Frequenz mit einer vorgegebenen Wellenlänge λ ein elektromagnetisches Signal empfangen zu können, wobei eine Vielzahl von Halbleiterchips längs der Dipolantenne verteilt angeordnet sind und mit der Dipolantenne elektrisch und/oder magnetisch gekoppelt sind und die Länge eines Abschnitts der Dipolantenne zwischen zwei benachbarten Halbleiterchips λ/4 beträgt.

12. Anordnung mit einer RFID-Transponderanordnung nach einem der Ansprüche 8 oder 9, weiterhin umfassend einen Körper (90), um dessen Umfangsfläche die RFID-Transponderanordnung gewickelt ist, wobei ein Teil der RFID-Transponderanordnung zwischen zwei benachbarten der Halbleiterchips so bemessen ist, dass er auf der Umfangsfläche des Körpers aufliegt und weitere Teile der RFID-Transponderanordnung außerhalb des vorgenannten Teils zumindest teilweise miteinander verklebt sind.

13. Anordnung nach Anspruch 12, umfassend eine weitere RFID-Transponderanordnung (94), der am Körper befestigt ist, wobei Daten, die auf dem weiteren Anhänger optisch lesbar aufgebracht sind, in mindestens einem der Halbleiterchips gespeichert sind.

14. Anordnung nach Anspruch 12 oder 13, bei dem die Dipolantenne der RFID-Transponderanordnung eine Länge aufweist und der auf der Umfangsfläche aufliegende Teil der RFID-Transponderanordnungmindestens ein Drittel der Länge aufweist.

15. Verfahren zum Betreiben einer RFID-Transponderanordnung nach einem der Ansprüche 1 bis 11, umfassend:
- Bereitstellen eines Körpers (90);
- Anbringen eines Kennzeichnungsmittels (94) an dem Körper (90), welches optisch lesbare Information (96) aufweist;
- Anbringen der RFID-Transponderanordnung am Körper (90), indem ein Teil (A) der RFID-Transponderanordnung um den Körper (90) gewickelt wird und außerhalb des vorgenannten Teils liegende weitere Teile (A1, A2) der RFID-Transponderanordnung zumindest teilweise miteinander verklebt werden;
- Programmieren von Information in den Halbleiterchip der RFID-Transponderanordnung, die von der optisch lesbaren Information (96) abhängt.

16. Verfahren nach Anspruch 15, bei dem die RFID-Transponderanordnung zerstört wird, indem die Dipolantenne außerhalb des Teils (A1, A2, 92), der um den Körper (90) gewickelt ist, durchtrennt wird, und bei dem die maximale Entfernung (G) zwischen der RFID-Transponderanordnung und einem Lesegerät (93), mit der die programmierte Information aus dem Halbleiterchip der RFID-Transponderanordnung noch auslesbar ist, im durchtrennten Zustand im Bereich von 2 bis 10 Mal geringer, vorzugsweise von 5 bis 10 Mal geringer ist als im nicht durchtrennten Zustand.

## Claims

1. An RFID transponder assembly, comprising:
- a substrate layer (10);
- a void structure (20) which is applied to the substrate layer and comprises spaced-apart adhesion force adjustment means (21a, 21b, 21c) which reduce an adhesion force;
- an RFID transponder which is applied above the substrate layer (10) and comprises at least one semiconductor chip (43) and a dipole antenna (30);
- wherein the RFID transponder comprises an inlay (40) including the at least one semiconductor chip (43) and a loop antenna (42) to which the semiconductor chip (43) is contacted, the loop antenna (42) and a portion of the dipole antenna (30) being superimposed.

2. The RFID transponder assembly according to claim 1, in which the dipole antenna (30) has a longitudinal extension and the void structure comprises a plurality of elements (21a, 21b, 21c) arranged side by side and spaced apart from each other and an upper layer (22) which is applied above the elements (21a, 21b, 21c) of the void structure and contacts the substrate layer (10) between the elements of the void structure, the dipole antenna (30) contacting the upper layer.

3. The RFID transponder assembly according to claim 2, in which the elements (21a, 21b, 21c) cause an adhesive force between one of the substrate layer (10) and the dipole antenna (30) to be greater in some places than to the other one of the substrate layer (10) and the dipole antenna (30).

4. The RFID transponder assembly according to claim 2 or 3, in which an adhesive layer (23) is applied above the upper layer (22), with which the RFID transponder assembly in the area of a section (2) of the RFID transponder assembly can be glued to another part of the RFID transponder assembly in the area outside (1) the section.

5. The RFID transponder assembly according to claim 4, in which an adhesive force (H1) between one of the elements (21a, 21b, 21c) of the void structure and the substrate layer (10) is lower than an adhesive force (H4) between the dipole antenna (30) and the adhesive layer (23), and in which the aforementioned adhesive forces (H1, H4) in turn are lower than an adhesive force (H3) between the dipole antenna (30) and the upper layer (22) or (H21) between the upper layer (22) and the substrate layer (10) or (H22) between the upper layer (22) and one of the elements of the void structure (21a, 21b).

6. The RFID transponder assembly according to claim 1, in which the void structure (20) is applied in a portion (2) of the substrate layer (10) and the dipole antenna (30) contacts the substrate layer (10) outside the portion while omitting the void structure.

7. The RFID transponder assembly according to any of claims 1 to 6, in which the loop antenna (42) is coupled to the dipole antenna (30) by means of a substantially magnetic effective field.

8. The RFID transponder assembly according to claim 7, in which the RFID transponder comprises at least one further semiconductor chip (432) which is contacted to a loop antenna (422) which in turn is coupled to the dipole antenna by means of an electric effective field, the dipole antenna in turn comprising a loop in an overlapping area of loop antenna and dipole antenna.

9. The RFID transponder assembly according to any of claims 1 to 6, in which the RFID transponder comprises a first semiconductor chip (63) and at least one second semiconductor chip (64), which each are contacted to a matching network (60, 61), each matching network being connected to the dipole antenna (62).

10. The RFID transponder assembly according to claim 8 or 9, in which, in operation, data stored in one of the semiconductor chips (431) of the RFID transponder are dependent on data stored in the other one of the semiconductor chips (432) of the RFID transponder.

11. The RFID transponder assembly according to any of claims 1 to 10, in which the dipole antenna is designed to be able to receive an electromagnetic signal at a frequency with a predetermined wavelength λ, a plurality of semiconductor chips being arranged so as to be distributed along the dipole antenna and to be electrically and/or magnetically coupled to the dipole antenna, and the length of a portion of the dipole antenna between two adjacent semiconductor chips being equal to λ/4.

12. The assembly comprising an RFID transponder assembly according to any of claims 8 or 9, further comprising a body (90) around the circumferential surface of which the RFID transponder assembly is wrapped, wherein a part of the RFID transponder assembly between two adjacent ones of the semiconductor chips is dimensioned so as to rest on the circumferential surface of the body and further parts of the RFID transponder assembly outside the aforementioned part are glued to each other at least partially.

13. The assembly according to claim 12, comprising a further RFID transponder assembly (94) attached to the body, wherein data applied to the further tag in an optically readable form is stored in at least one of the semiconductor chips.

14. The assembly according to claim 12 or 13, in which the dipole antenna of the RFID transponder assembly has a length and that part of the RFID transponder assembly which rests on the circumferential surface has at least one third of the length.

15. A method for operating an RFID transponder assembly according to any of claims 1 to 11, comprising:
- providing a body (90);
- attaching an identification means (94) to the body (90) having optically readable information (96);
- attaching the RFID transponder assembly to the body (90) by wrapping a part (A) of the RFID transponder assembly around the body (90) and at least partially gluing together further parts (A1, A2) of the RFID transponder assembly which lie outside the aforementioned part;
- programming information into the semiconductor chip of the RFID transponder assembly which depends on the optically readable information (96).

16. The method according to claim 15, in which the RFID transponder assembly is destroyed by severing the dipole antenna outside that part (A1, A2, 92) which is wrapped around the body (90), and in which the maximum distance (G) between the RFID transponder assembly and a reader (93), with which the programmed information can still be read out from the semiconductor chip of the RFID transponder assembly, is in the range of 2 to 10 times less, preferably 5 to 10 times less in the severed state than in the non-severed state.

## Revendications

1. Ensemble transpondeur RFID, comprenant :
- une couche de substrat (10) ;
- une structure à vide (20) apposée sur la couche de substrat, qui comprend des moyens de réglage de force d'adhésion (21a, 21b, 21c) espacés réduisant une force d'adhérence ;
- un transpondeur RFID apposé au-dessus de la couche de substrat (10), qui comprend au moins une puce semiconductrice (43) et une antenne dipôle (30) ;
- sachant que le transpondeur RFID comprend un insert (40) qui contient l'au moins une puce semiconductrice (43) et une antenne en boucle (42) avec laquelle la puce semiconductrice (43) est mise en contact, sachant que l'antenne en boucle (42) et une section de l'antenne dipôle (30) se superposent.

2. Ensemble transpondeur RFID selon la revendication 1, dans lequel l'antenne dipôle (30) présente une extension longitudinale et la structure à vide comprend plusieurs éléments (21a, 21b, 21c) disposés de manière espacée les uns à côté des autres et une couche supérieure (22) qui est apposée au-dessus des éléments (21a, 21b, 21c) de la structure à vide et est en contact avec la couche de substrat (10) entre les éléments de la structure à vide, sachant que l'antenne dipôle (30) est en contact avec la couche supérieure.

3. Ensemble transpondeur RFID selon la revendication 2, dans lequel les éléments (21a, 21b, 21c) font en sorte que, par endroits, une force d'adhérence entre l'une de la couche de substrat (10) et de l'antenne dipôle (30) soit plus grande que par rapport à l'autre de la couche de substrat (10) et de l'antenne dipôle (30).

4. Ensemble transpondeur RFID selon la revendication 2 ou 3, dans lequel une couche de colle (23) avec laquelle l'ensemble transpondeur RFID, dans la zone d'une section partielle (2) de l'ensemble transpondeur RFID, peut être collé à une autre partie de l'ensemble transpondeur RFID dans la zone située hors (1) de la zone partielle est apposée au-dessus de la couche supérieure (22).

5. Ensemble transpondeur RFID selon la revendication 4, dans lequel une force d'adhérence (H1) entre un des éléments (21a, 21b, 21c) de la structure à vide et la couche de substrat (10) est plus faible qu'une force d'adhérence (H4) entre l'antenne dipôle (30) et la couche de colle (23) et dans lequel les forces d'adhérence susmentionnées (H1, H4) sont à leur tour plus faibles qu'une force d'adhérence (H3) entre l'antenne dipôle (30) et la couche supérieure (22) ou (H21) entre la couche supérieure (22) et la couche de substrat (10) ou (H22) entre la couche supérieure (22) et un des éléments de la structure à vide (21a, 21b).

6. Ensemble transpondeur RFID selon la revendication 1, dans lequel la structure à vide (20) est apposée dans une section (2) de la couche de substrat (10) et est en contact avec l'antenne dipôle (30) en dehors de la section de la couche de substrat (10) en omettant la structure à vide.

7. Ensemble transpondeur RFID selon l'une des revendications 1 à 6, dans lequel l'antenne en boucle (42) est couplée à l'antenne dipôle (30) moyennant un champ actif sensiblement magnétique.

8. Ensemble transpondeur RFID selon la revendication 7, dans lequel le transpondeur RFID comprend au moins une puce semiconductrice (432) supplémentaire qui est mise en contact avec une antenne en boucle (422), laquelle est à son tour couplée à l'antenne dipôle moyennant un champ actif électrique, sachant que l'antenne dipôle comprend à son tour une boucle dans une zone de chevauchement de l'antenne en boucle et de l'antenne dipôle.

9. Ensemble transpondeur RFID selon l'une des revendications 1 à 6, dans lequel le transpondeur RFID comprend une première puce semiconductrice (63) et au moins une deuxième puce semiconductrice (64) qui sont mises en contact avec respectivement un réseau d'adaptation (60, 61), sachant que chaque réseau d'adaptation est relié à l'antenne dipôle (62).

10. Ensemble transpondeur RFID selon la revendication 8 ou 9, dans lequel, en fonctionnement, des données qui sont enregistrées dans une des puces semiconductrices (431) du transpondeur RFID sont indépendantes de données qui sont enregistrées dans l'autre des puces semiconductrices (432) du transpondeur RFID.

11. Ensemble transpondeur RFID selon l'une des revendications 1 à 10, dans lequel l'antenne dipôle est conçue pour pouvoir recevoir un signal électromagnétique à une fréquence d'une longueur d'onde λ spécifiée, sachant qu'une pluralité de puces semiconductrices sont disposées de manière répartie le long de l'antenne dipôle et sont couplées électriquement et/ou magnétiquement à l'antenne dipôle et la longueur d'une section de l'antenne dipôle entre deux puces semiconductrices contiguës est de λ/4.

12. Ensemble comprenant un ensemble transpondeur RFID selon l'une des revendications 8 ou 9, comprenant en outre un corps (90) autour de la face périphérique duquel l'ensemble transpondeur RFID est enroulé, sachant qu'une partie de l'ensemble transpondeur RFID entre deux puces semiconductrices contiguës est dimensionnée de telle sorte qu'elle repose sur la face périphérique du corps et des parties supplémentaires de l'ensemble transpondeur RFID en dehors de la partie susmentionnée soient collées au moins en partie les unes aux autres.

13. Ensemble selon la revendication 12, comprenant un ensemble transpondeur RFID (94) supplémentaire qui est fixé au corps, sachant que des données qui sont apposées de manière optiquement lisible sur l'étiquette supplémentaire sont enregistrées dans au moins une des puces semiconductrices.

14. Ensemble selon la revendication 12 ou 13, dans lequel l'antenne dipôle de l'ensemble transpondeur RFID présente une longueur et la partie de l'ensemble transpondeur RFID qui repose sur la face périphérique présente un tiers de la longueur.

15. Procédé de fonctionnement d'un ensemble transpondeur RFID selon l'une des revendications 1 à 11, comprenant :
- la mise à disposition d'un corps (90) ;
- la mise en place d'un moyen de repérage (94) au niveau du corps (90), lequel présente des informations (96) lisibles optiquement ;
- la mise en place de l'ensemble transpondeur RFID au niveau du corps (90) en ce qu'une partie (A) de l'ensemble transpondeur RFID est enroulée autour du corps (90) et des parties supplémentaires (A1, A2) de l'ensemble transpondeur RFID situées en dehors de la partie susmentionnée sont collées au moins en partie les unes aux autres ;
- la programmation d'informations dans la puce semiconductrice de l'ensemble transpondeur RFID qui dépend des informations (96) lisibles optiquement.

16. Procédé selon la revendication 15, dans lequel l'ensemble transpondeur RFID est détruit en ce que l'antenne dipôle est sectionnée en dehors de la partie (A1, A2, 92) qui est enroulée autour du corps (90) et dans lequel l'éloignement maximal (G) entre l'ensemble transpondeur RFID et un lecteur (93) avec lequel les informations programmées sont encore lisibles à partir de la puce semiconductrice de l'ensemble transpondeur RFID est de 2 à 10 fois, de préférence de 5 à 10 fois moindre à l'état sectionné qu'à l'état non sectionné.
